# EUROPÄISCHE PATENTSCHRIFT

(11) **EP 3 121 065 B1**
(45) Veröffentlichungstag und Bekanntmachung des Hinweises auf die Patenterteilung: **22.08.2018**
(21) Anmeldenummer: 16176166.3
(22) Anmeldetag: 24.06.2016
(51) Int. Cl.: B60R 3/00, B62D 35/00, B60R 19/02

(54) **STOSSFÄNGER MIT EINER VERPRÄGUNG**
FENDER WITH EMBOSSING
PARE-CHOCS DOTES D'ESTAMPAGES

(30) Priorität: 20.07.2015 DE 102015213605
(43) Veröffentlichungstag der Anmeldung: 25.01.2017
(73) Patentinhaber: Volkswagen Aktiengesellschaft, 38440 Wolfsburg (DE)
(72) Erfinder: Niesner, Dr. Reinhold, 38124 Braunschweig (DE); Kühn, Dr. Gerarld, 38106 Braunschweig (DE); Denich, Artur, 38471 Rühen (DE)

(56) Entgegenhaltungen:
- EP-A2- 0 899 165
- DE-A1- 3 118 788
- GB-A- 1 295 126

## Beschreibung

Die Erfindung betrifft einen Stoßfänger mit einer Verprägung zum Draufstellen für Personen nach den Merkmalen des Anspruchs 1.

Zum Erreichen von Fahrzeugscheiben hoher Fahrzeuge und Fahrzeugdächern wird Personen eine Vielzahl von Hilfsmitteln angeboten.

Bekannte Hilfsmittel sind einhängbare Trittstufen. Diese werden an Haken hinter ein freies Ende einer Stoßstange eingehakt, siehe die DE 94 16 113 U. Tritt eine Person auf eine solche Trittstufe, kann die Person das Dach, Aufbauten oder Dachgepäck des Fahrzeugs bequemer erreichen. Darüber hinaus wird die Erreichbarkeit der Windschutzscheibe, zum Beispiel zum Eiskratzen im Winter, wesentlich verbessert.

Bewegliche Trittstufen zum Einbau in oder Unterbau unter Fahrzeuge sind bereits seit einiger Zeit vielfach bekannt. Sie weisen zwei Positionen auf. Die bewegliche Trittstufe ist in einer Fahrtposition unterhalb des Fahrzeuges unter die Fahrzeugkontur oder in eine Tasche in der Fahrzeugkontur eingefahren. Hingegen ist die Trittstufe in einer Benutzungsposition ein Stück weit unter der Fahrzeugkontur nach außen oder aus der Tasche in der Fahrzeugkontur nach außen herausgefahren, so dass eine Person sie betreten kann.

Beweglich zugängliche Trittstufen sind ebenfalls bekannt, beispielsweise aus der DE 10 2004 035 326 A1. Die Druckschrift lehrt unterhalb einer Fahrzeugtür von LKWs einen Einstiegsbereich mit Trittstufen anzuordnen. In diesem Einstiegsbereich ist jeweils eine aus einer eingefahrenen Fahrzeug-Standstellung in eine ausgefahrene Fahrzeug-Fahrtstellung ausfahrbare Kühlluftzuführeinrichtung vorgesehen. In Abhängigkeit von Stehen oder Fahren des LKWs ist das im Einstiegsbereich zwischen den Trittflächen vorhandene Volumen während der Fahrt als Kühlluftkanal nutzbar. Im Stand des Fahrzeuges hingegen wird die Kühlluftzuführeinrichtung wieder eingefahren, so dass das zwischen den Trittstufen vorhandene Volumen zum Einsteigen genutzt werden kann.

Auch eine Integration von Trittstufen in Stoßfänger ist bekannt. Stoßfänger weisen für eine Integration der Trittstufen Verprägungen im Stoßfänger auf. Als Trittstufe sind Trittbleche mit der Grundfläche der Verprägung verschraubt. Fahrzeuge mit Stoßfängern mit integrierter Trittstufe werden heute von Camping- und Caravan-Händlern angeboten.

Die FR 2 858 796 A1 lehrt ein Abführen von gestauter Luft vor einem Stoßfänger. Sie offenbart dazu, einen vergitterten Durchlass in die Vorderseite des Stoßfängers einzulassen. Der Durchlass führt die Luftmasse in die Radhausschale des Kraftfahrzeuges in zwei unterschiedlichen Strömungen ab.

EP 0 899 165 A2 offenbart einen Frontlenker-Lastkraftwagen mit verschmutzungsarmen Einstiegen. Hierzu ist vorgesehen, in einem vorderen Stoßdämpfer eine Lufteintrittsöffnung vorzusehen und über einen Düsenkanal mit einer hinteren, in einem Einstiegskasten endenden Luftaustrittsöffnung zu verbinden. Die hintere Austrittsquerfläche ist wesentlich kleiner als die vordere Eintrittsquerfläche, so dass es zur Ausbildung eines Düsenkanals kommt, in dem die durchströmende Luft beschleunigt und gezielt gerichtet wird.

Der Erfindung liegt nun die Aufgabe zugrunde, den Luftwiderstand von Stoßfängern nach dem Oberbegriff des Anspruchs 1 zu reduzieren.

Die Erfindung wird von einem Stoßfänger mit den im Oberbegriff des Anspruchs 1 genannten Merkmalen dadurch gelöst, dass eine erste Entlüftungsöffnung mit einem Entlüftungskanal verbunden ist und der Entlüftungskanal eine Entlüftungskanallängsachse aufweist, die mit der Fahrzeugfahrrichtung einen spitzen Winkel ausbildet.

Der Entlüftungskanal erstreckt sich entgegen der Fahrzeugfahrrichtung. Dadurch, dass sich der Entlüftungskanal entgegen der Fahrzeugfahrrichtung erstreckt, ist das Volumen der Verprägung vollständig als Trittstufe nutzbar. Dieses hat den Vorteil, dass die Maßvorgaben von Berufsgenossenschaften für Aufstiege an Fahrzeugen einfacher eingehalten werden können.

Der Entlüftungskanal ist im Querschnitt weitend ausgeformt. Düsen weisen bevorzugt in der Düsenerweiterung bis zur Düsenmündung sich weitend ausformende Querschnitte auf. Sie haben damit die Form eines umgekehrten Trichters. Der Vorteil eines weitend ausgeformten Querschnitts ist, durch ihn hindurchtretende Luftmassen zu entspannen. Wenn der Entlüftungskanal im Querschnitt weitend ausgeformt ist, entspannt er bevorzugt die Luft beim Vorbeileiten am Vorderreifen an die Seite des Fahrzeugs. Damit staut sich auch im Radkasten keine Luftmasse.

Der Vorteil ist, dass der Luftwiderstand des Stoßfängers nach dem Oberbegriff des Anspruchs 1 durch diese Maßnahme reduziert wird. Gegenüber einem einfachen Abführen gestauter Luftmassen hat der Entlüftungskanal den Vorteil, die Luftmassen in eine bestimmte Richtung abführen zu können. Sie werden schräg aus dem Radkasten herausgeführt. Dadurch wird der C_{w}-Wert des Fahrzeuges mit Entlüftungskanal gegenüber dem C_{w}-Wert eines Fahrzeugs ohne Entlüftungskanal reduziert, also verbessert.

Strömungsablösungen erhöhen den Luftwiderstand deutlich. Ein weiterer Vorteil des Entlüftungskanals ist, dass dieser Strömungsablösungen an der Verprägung entgegenwirkt.

Für die Zwecke der vorliegenden Beschreibung soll die übliche Fahrtrichtung eines Kraftfahrzeugs mit "-x" ("minus x"), die Richtung entgegen seiner üblichen Fahrtrichtung mit "+x" ("plus x"), ausgehend von der üblichen Fahrtrichtung (-x) die Richtung in der Horizontalen quer zur x-Richtung nach rechts gesehen mit "+y", ausgehend von der üblichen Fahrtrichtung (-x) die Richtung in der Horizontalen quer zur x-Richtung nach links gesehen mit "-y", die Richtung in der Vertikalen quer zur x-Richtung nach oben gesehen mit "+z", und die Richtung in der Vertikalen quer zur x-Richtung nach unten gesehen mit "-z" bezeichnet werden. Diese Bezeichnungsweise der Raumrichtungen in kartesischen Koordinaten entspricht dem in der Kraftfahrzeugindustrie allgemein verwendeten Koordinatensystem. Überdies werden Begriffe wie "vorne", "hinten", "oben" "unten" sowie Begriffe mit ähnlichem Bedeutungsinhalt einschließlich der Begriffe "rechts" und "links" in der Weise verwendet, wie sie zur Richtungsbezeichnung an einem Kraftfahrzeug üblicherweise gebraucht werden.

Die Trittfläche der Trittstufe bleibt bevorzugt frei von Zuläufen für Strömungskanäle, so dass die Trittfläche durch ein geeignet gewähltes Obermaterial einfacher nach den Vorgaben der Berufsgenossenschaft ausgeführt werden kann.

In einer weiteren Ausführungsform ist der Entlüftungskanal als ein separates Bauteil ausgebildet. Der Vorteil eines Entlüftungskanals als separates Bauteil ist seine einfache Fertigung. Dadurch, dass der Entlüftungskanal ein separates Bauteil ist, kann seine Form einfach geändert werden. Daraus resultiert eine gewisse Modularität.

In einer weiteren Ausführungsform weist der Entlüftungskanal im Querschnitt ein C-förmiges Profil auf, das zum Beispiel rund oder eckig ausgeformt sein kann. C-Profile weisen auf ihrem Umfang eine Aussparung auf. Somit sind C-Profile in ihrer Länge in Richtung der Aussparung offen. Diese Öffnung weist in ihrer Längsrichtung zwei Kanten auf. Der Vorteil von C-Profilen ist, dass diese entlang ihrer beiden Kanten an anderen Flächen gefügt werden können. Ein Entlüftungskanal mit C-Profil ist also an seinen beiden Kanten mit der äußeren Innenseite verbindbar.

In einer weiteren Ausführungsform ist die äußere Innenseite der Verprägung in eine Wand des Entlüftungskanals übergehend ausgebildet. Ein erfindungsgemäßer Stoßfänger mit Entlüftungskanal lässt sich einfach aus zwei Teilen herstellen. Dazu sind ein Stoßfänger mit langgezogener Außenkante und ein Entlüftungskanal mit C-Profil miteinander zu verbinden. Der Vorteil einer Verprägung, die in eine Wand des Entlüftungskanals übergeht, ist, dass diese Wand als durchgehende Abströmfläche für den Entlüftungsstrom ausgebildet sein kann. Zwischen der Wand und dem Stoßfänger ist keine Fuge, die das Abströmen des Entlüftungsstroms stört. Ohne Fuge reißt der Entlüftungsstrom vorteilhafterweise nicht ab, er wird auch nicht in der Fuge aufgestaut.

In einer weiteren Ausführungsform weist der Stoßfänger Steckbuchsen auf. Steckbuchsen dienen einer Aufnahme von Steckteilen. Somit sind sie ein Teil einer lösbaren Verbindung. Üblicherweise sind Steckteile und Steckbuchsen formkodiert. Nur bestimmte Steckteilformen stimmen mit der Form der Steckbuchse überein. Nur dann können die beiden Teile eine Verbindung herstellen. Die Steckteile sind vorteilhafterweise gegen ein Herausfallen oder Herausnehmen aus der Steckbuchse gesichert. Der Vorteil von Steckbuchsen ist, dass dritte Teile, wie zum Beispiel Deckel, einfach mit dem Stoßfänger verbunden werden können. Dazu müssen die dritten Teile lediglich als Steckteile mit geeigneten Steckbuchsen-Gegenstücken ausgebildet und angesteckt werden.

In einer weiteren Ausführungsform weist der Stoßfänger einen Deckel auf. Deckel verschließen Hohlräume, so dass diese vor einem Eindringen von Stoffen geschützt sind. Der Deckel im Stoßfänger verhindert oder verringert ein Eindringen von Fahrtwind in die Verprägung. Der Fahrtwind kann sich daher nicht in der Verprägung anstauen. Verschlossene Verprägungen reduzieren somit den Luftwiderstand. Der Vorteil des Deckels ist, den Luftwiederstand zu reduzieren. Auch schützt er vor dem Eindringen von Nässe oder Schnee. In Verprägungen können Gegenstände, zum Beispiel Äste, hängenbleiben. Ein weiterer Vorteil des Deckels ist, den Schutz vor einem Hängenbleiben zu erhöhen.

In einer weiteren Ausführungsform weist der Deckel mindestens einen Durchlass auf. Der Durchlass lässt Fahrtwind durch den Deckel in die Verprägung strömen. Durch die Durchlassform und -tiefe kann der Entlüftungsstrom gezielt in Richtung des Entlüftungskanals geführt werden, so dass der Entlüftungsstrom besser abgeführt wird. Der Vorteil eines Durchlasses im Deckel ist, dass gezielt ein beabsichtigter Einlass-Luftstrom in die Verprägung erreicht werden kann, dessen Menge im Allgemeinen geringer sein wird als bei einem Fehlen des Deckels.

Der Deckel kann in einer Ausführungsform lösbar und/oder bewegbar mit dem Stoßfänger verbunden beziehungsweise verbindbar sein, und zwar insbesondere mit der Grundfläche, der inneren Innenseite oder der äußeren Innenseite der Verprägung des Stoßfängers. Beispielsweise kann er mit einer Schwenkachse an der inneren Innenseite angelenkt sein, oder er kann mittels einer Rast- oder Steckverbindung an der äußeren Innenseite lösbar angebracht sein. Soll die Verprägung im Fahrzeugstand als Trittstufe benutzt werden, so kann ein derart ausgebildeter Deckel dann vorteilhaft entfernt oder weggeschwenkt werden und die Grundfläche zur Benutzung als Trittstufe freigeben, während während der Fahrzeugfahrt der Deckel vorteilhaft wieder vor der Verprägung angesteckt beziehungsweise vor die Verprägung geschwenkt ist, um die zuvor genannten Vorteile eines Deckels vor der Verprägung zu erreichen.

Die verschiedenen in dieser Anmeldung genannten Ausführungsformen der Erfindung sind, sofern im Einzelfall nicht anders ausgeführt, mit Vorteil miteinander kombinierbar.

Die Erfindung wird nachfolgend in Ausführungsbeispielen anhand der zugehörigen Zeichnungen erläutert. Es zeigen:
- Figur 1: einen Stoßfänger in einer Aufsicht;
- Figur 2: einen erfindungsgemäßen Entlüftungskanal in einer Vergrößerung;
- Figur 3: Profile von Entlüftungskanälen (im Querschnitt);
- Figur 4: einen Stoßfänger mit einem Deckel in einer Aufsicht und
- Figur 5: ein weiteres Ausführungsbeispiel eines Stoßfängers.

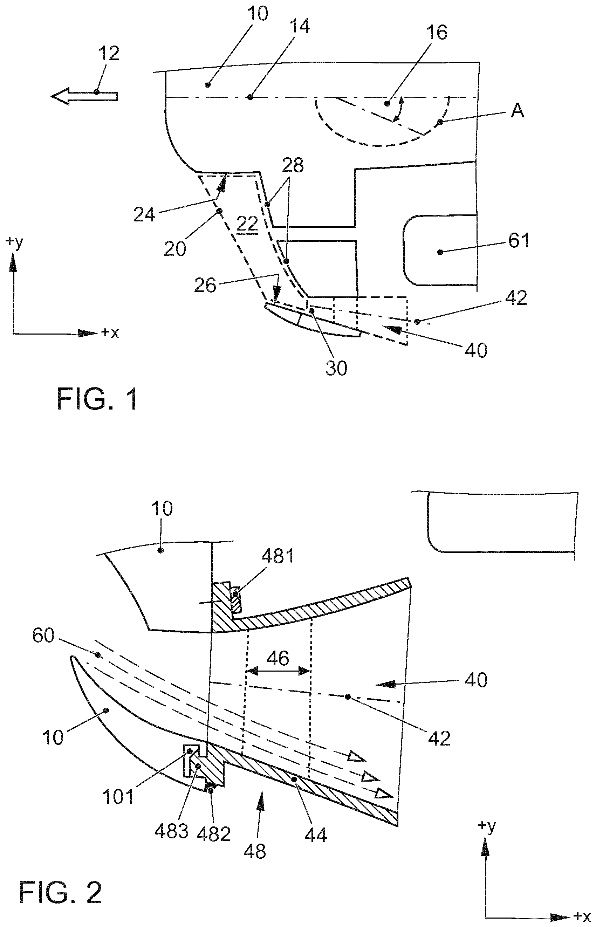

Figur 1 zeigt die fahrzeuglinke äußere Seite eines Stoßfängers 10 in einer Aufsicht. Der Stoßfänger 10 verläuft quer zur Fahrzeuglängsachse 14, er schließt ein Fahrzeug in Fahrzeugfahrtrichtung 12 (in Richtung -x) nach vorne hin ab.

Der Stoßfänger 10 weist an seinen beiden äußeren Seiten Verprägungen 20 auf (in Fig. 1 ist nur die fahrzeuglinke äußere Seite dargestellt). Mit Verprägung 20 werden Stufen in einer Oberfläche bezeichnet. Die Stufe hat dabei eine bestimmte Form. Die Verprägung 20 ist eine Stufe im Stoßfänger 10.

Die Verprägung 20 entspricht einer Einwölbung, die entgegengesetzt zur Fahrzeugfahrrichtung 12 in den Stoßfänger 10 eingewölbt ist (also in Richtung +x). Mit Blickrichtung in die Verprägung 20 hinein, also in Richtung +x, das ist in der Zeichenebene der Figur 1 von links nach rechts, weist die Verprägung 20 an ihrer linken Seite eine innere Innenseite 24 auf. Geradeaus (in Richtung +x) schaut der Betrachter dann auf die Rückseite 28 der Verprägung 20. Rechts besitzt die Verprägung 20 eine äußere Innenseite 26.

Die Verprägung 20, also die Stufe, besitzt eine Grundfläche 22. Die Grundfläche 22 der Verprägung 20 liegt in der x-y-Ebene zwischen der inneren Innenseite 24 und der äußeren Innenseite 26. Das ist die Zeichenebene von Figur 1.

In der vorliegenden Ausführungsform ist die Grundfläche 22 die Trittfläche einer Trittstufe. Auf sie kann sich eine Person (nicht dargestellt) mit einem Fuß oder beiden Füßen stellen.

Alternativ kann die Verprägung 20 in weitere Stufen untergliedert werden.

In der vorliegenden Ausführungsform ist die Rückseite 28 der Verprägung 20 mit einer Entlüftungsöffnung 30 versehen. Diese Entlüftungsöffnung 30 ist ein Durchlass, der während der Vorwärtsfahrt des Fahrzeugs einen Luftstrom entlang der äußeren Innenseite 26 durch die Rückseite 28 durchlässt. Die Größe der Entlüftungsöffnung 30 kann unterschiedlich ausgestaltet sein, von einer kleinen Bohrung bis zur Vereinnahmung der gesamten Rückseite 28.

In einer weiteren Ausführungsform kann die Entlüftungsöffnung 30 auch aus einer Mehrzahl kleinerer Entlüftungsöffnungen 30 bestehen.

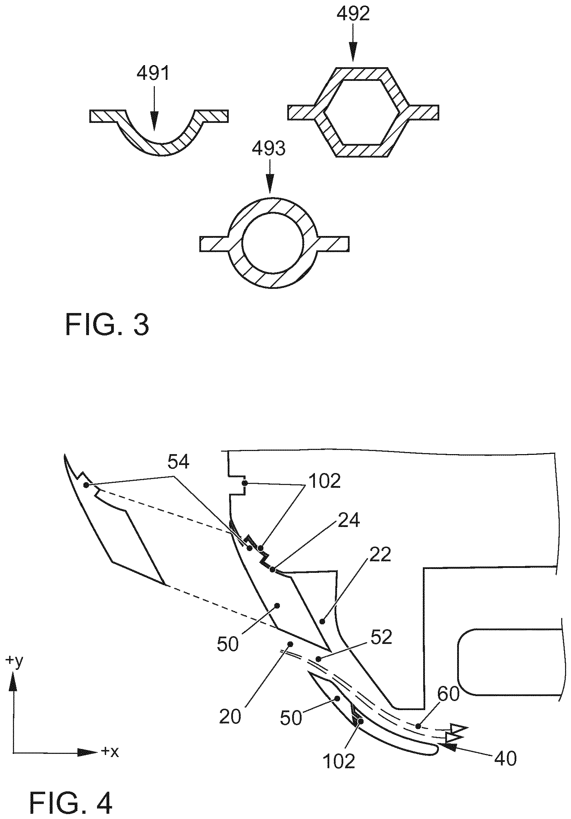

In einer weiteren Ausführungsform formen die Entlüftungsöffnungen 30 Löcher oder Schlitze beziehungsweise Durchlässe unterschiedlicher Querschnitte (s.a. Figur 3).

An die Entlüftungsöffnung 30 schließt sich ein Entlüftungskanal 40 stromabwärts an.

In der bevorzugten Ausführungsform ist der Entlüftungskanal 40 konisch. Er besitzt eine Entlüftungskanalachse 42, die ihn zentral durchläuft. Der Verlauf der Entlüftungskanalachse 42 ist im Ausschnitt A wiedergegeben. Zu sehen ist, dass die Fahrzeuglängsachse 14 und die Entlüftungskanalachse 42 einen spitzen Winkel 16 miteinander einschließen. Ein spitzer Winkel bezeichnet einen Winkel zwischen 0 und 90 Grad zwischen der Fahrzeuglängsachse 14 und der Entlüftungskanalachse 42 (entgegen der Fahrzeugfahrtrichtung 12). Die 0 Grad Stellung ist dabei genauso eingeschlossen, wie die 90 Grad Stellung der beiden zueinander. Die Figur 1 lehrt, dass durch die Anordnung und Anstellung des Entlüftungskanals 40 in einem bestimmten spitzen Winkel 16 der Entlüftungsstrom 60 am linken Vorderreifen 61 vorbeigeführt wird. Dadurch wird der Entlüftungsstrom 60 nicht gestaut, so dass eine Reduzierung des C_{w}-Werts des Fahrzeuges erfolgt. Der C_{w}-Wert ist eine Größe um den Luftwiderstand eines Fahrzeuges anzugeben. Der Luftwiderstand eines Fahrzeugs berechnet sich aus dem Produkt von Staudruck, C_{w}-Wert und Stirnfläche des Fahrzeugs: *F* = *q* · *c_{w}* · *A.* Je niedriger der C_{w}-Wert, desto niedriger ist sein Luftwiderstand. Das Durchlassen des Entlüftungsstroms 60 führt Luft ab und senkt damit den Luftwiderstand des Fahrzeugs.

Der Anstellwinkel des Entlüftungskanals 40 hat einen großen Einfluss auf die Aerodynamik des Fahrzeugs (nicht dargestellt). Denn in Abhängigkeit des Anstellwinkels reißt die Strömung an der Außenseite des Stoßfängers ab. Daher ist der Anstellwinkel vorteilhaft so gewählt, dass die Strömung spät oder idealerweise erst an der Hinterkante des Stoßfängers und des Entlüftungskanals abreißt.

Figur 2 zeigt einen erfindungsgemäßen Entlüftungskanal 40 in einer vergrößerten Darstellung.

Dargestellt ist ein Stoßfänger 10, an den ein Entlüftungskanal 40 in Form eines separaten Bauteils 48 angeschlagen ist. In einer bevorzugten Ausführungsform ist der Entlüftungskanal 40 als separates Bauteil 48 mittels eines Hakens 483 in eine Steckbuchse 101 des Stoßfängers 10 eingeclipst.

In alternativen Ausführungsformen ist der Entlüftungskanal 40 an einer Seite mit dem Stoßfänger 10 durch eine Verschraubung 481, an seiner anderen Seite mit einer Schweißnaht 482 befestigt.

Der Entlüftungskanal 40 hat eine umlaufende Wand 44. Sie ist stark genug, um nicht vom Entlüftungsstrom 60 verformt werden zu können. Daher besteht sie aus einigen Millimetern Kunststoff. Aber auch andere Materialien, wie zum Beispiel Stahl, Aluminium, Magnesium oder Faserverbundstoffe halten bei geeigneter Dimensionierung einer Verformung stand.

Der Querschnitt 46 des Entlüftungskanals 40 weitet sich entgegen der Fahrzeugfahrrichtung 12 auf, also in der Richtung +x in Richtung des linken Vorderreifens 61 beziehungsweise in Richtung Fahrzeugende (nicht dargestellt). Der Entlüftungsstrom 60 wird durch diese Trichteröffnung entspannt, so dass er keinen erhöhten Luftwiderstand an der hinteren Seite des vorderen Radkastens (nicht dargestellt) erzeugt.

Figur 3 zeigt verschiedene Querschnittsprofile von Entlüftungskanälen 40.

In einer bevorzugten Ausführungsform ist das Profil eines Entlüftungskanals 40 im Querschnitt C-förmig, also als ein C-Profil 491 ausgebildet. Damit ist es an einer Seite geöffnet. Der Entlüftungskanal 40 im C-Profil 491 ist mit seiner offenen Seite an eine langestreckte äußere Stoßfängerseite angeschlagen, so dass diese die geöffnete Seite des C-Profils 491 zu einem Entlüftungskanal 40 schließt (nicht dargestellt).

In alternativen Ausführungsformen ist das Profil des Entlüftungskanals 40 ein Mehreckprofil 492 oder ein Rundprofil 493.

Figur 4 zeigt einen Stoßfänger 10 mit einem Deckel 50 in einer Aufsicht. Der Deckel 50 ist mit Deckelhaken 54 in Steckbuchsen 102 eingeclipst und auf diese Weise lösbar und werkzeuglos wieder anbringbar an der inneren Innenseite 24 der Verprägung 20 angebracht.

In den Deckel 50 ist ein Durchlass 52 eingelassen. Der Durchlass 52 führt den Entlüftungsstrom 60 direkt in den Entlüftungskanal 40 hinein.

Der Deckel 50 verschließt die Verprägung 20, so dass der Luftwiderstand gesenkt wird. Durch den Deckel 50 wird der Anstellwinkel für die eintretende Luft optimiert. Der Deckel 50 ist aus dem gleichen Material wie der Stoßfänger 10.

Ist der Deckel 50 mittels der Clipsverbindung 54, 102 am Stoßfänger 10 angebracht, so blockiert er weitgehend den Zugang zur Grundfläche 22 der Verprägung 20, so dass diese nicht als Trttstufe genutzt werden kann. Während der Fahrt ergeben sich dann die bereits geschilderten aerodynamischen Vorteile. Im Fahrzeugstand kann der Deckel 50 problemlos durch Lösen der Clipsverbindung 54, 102 zeitweilig abmontiert werden, so dass die Grundfläche 22 der Verprägung 20 als Trittfläche benutzbar ist. Nach Ende dieser Nutzung kann der Deckel 50 dann wieder vor der Verprägung 20 im Stoßfänger 10 angebracht werden.

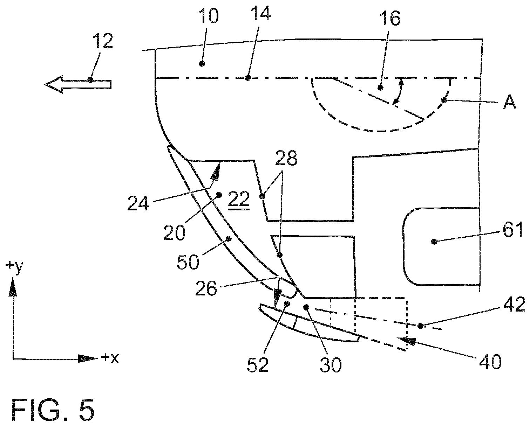

Schließlich zeigt Figur 5 ein Ausführungsbeispiel, bei dem der Deckel 50 mit der äußeren Innenseite 26 den Durchlass 52 bildet.

### Bezugszeichenliste

- 10: Stoßfänger
- 12: Fahrzeugfahrrichtung
- 14: Fahrzeuglängsachse
- 16: Spitzer Winkel
- 20: Verprägung
- 22: Grundfläche
- 24: Innere Innenseite
- 26: Äußere Innenseite
- 28: Rückseite
- 30: Entlüftungsöffnung
- 40: Entlüftungskanal
- 42: Entlüftungskanalachse
- 44: Wand
- 46: Querschnitt
- 48: Separates Bauteil
- 50: Deckel
- 52: Durchlass
- 54: Deckelhaken
- 60: Entlüftungsstrom
- 61: Linke Vorderreifen

- 101: Buchse
- 102: Steckbuchse

- 481: Verschraubung
- 482: Schweißnaht
- 483: Haken
- 491: C-Profil
- 492: Mehreckprofil
- 493: Rundprofil

## Patentansprüche

1. Stoßfänger (10) umfassend mindestens eine Verprägung (20), wobei die Verprägung (20) sich entgegen der Fahrzeugfahrrichtung (12) erstreckend ausgebildet ist und die Verprägung (20) eine Grundfläche (22), eine Rückseite (28), eine innere Innenseite (24) und eine äußere Innenseite (26) umfasst, wobei die Grundfläche (22) als Trittstufe ausgebildet ist und wobei die Rückseite (28) mindestens eine erste Entlüftungsöffnung (30) aufweist, **dadurch gekennzeichnet, dass** die erste Entlüftungsöffnung (30) mit einem Entlüftungskanal (40) verbunden ist, der Entlüftungskanal (40) sich entgegen der Fahrzeugfahrrichtung (12) erstreckt, der Entlüftungskanal (40) eine Entlüftungskanallängsachse (42) aufweist, die mit der Fahrzeugfahrtrichtung (12) einen spitzen Winkel (16) ausbildet, und der Entlüftungskanal (40) im Querschnitt (46) weitend ausgeformt ist.

2. Stoßfänger nach Anspruch 1, **dadurch gekennzeichnet, dass** der Entlüftungskanal (40) als ein separates Bauteil (48) ausgebildet ist.

3. Stoßfänger nach einem der vorhergehenden Ansprüche, **dadurch gekennzeichnet, dass** der Entlüftungskanal (40) ein C-Profil (48) aufweist.

4. Stoßfänger nach einem der vorhergehenden Ansprüche, **dadurch gekennzeichnet, dass** die äußere Innenseite (26) der Verprägung (20) in eine Wand (44) des Entlüftungskanals (40) übergehend ausgebildet ist.

5. Stoßfänger nach einem der vorhergehenden Ansprüche, **dadurch gekennzeichnet, dass** der Stoßfänger (10) Steckbuchsen (102) aufweist.

6. Stoßfänger nach einem der vorhergehenden Ansprüche, **dadurch gekennzeichnet, dass** der Stoßfänger (10) mindestens einen Deckel (50) aufweist.

7. Stoßfänger nach Anspruch 6, **dadurch gekennzeichnet, dass** der Deckel (50) mindestens einen Durchlass (52) aufweist.

8. Stoßfänger nach Anspruch 7, **dadurch gekennzeichnet, dass** der Durchlass (52) den Entlüftungsstrom (60) in den Entlüftungskanal (40) durchlässt.

9. Stoßfänger nach einem der Ansprüche 6 bis 8, **dadurch gekennzeichnet, dass** der Deckel (50) lösbar und/oder bewegbar mit dem Stoßfänger (10) verbunden oder verbindbar ist.

10. Stoßfänger nach Anspruch 9, **dadurch gekennzeichnet, dass** der Deckel (50) lösbar und/oder bewegbar mit der Grundfläche (22), der Rückseite (28), der inneren Innenseite (24) oder der äußeren Innenseite (26) der Verprägung (20) verbunden oder verbindbar ist.

## Claims

1. Bumper (10) comprising at least one embossing (20), wherein the embossing (20) is designed to extend counter to the direction of travel (12) of the vehicle and the embossing (20) comprises a base surface (22), a rear side (28), an internal inner side (24) and an external inner side (26), wherein the base surface (22) is designed as a step and wherein the rear side (28) has at least one first venting opening (30), **characterized in that** the first venting opening (30) is connected to a venting duct (40), the venting duct (40) extends counter to the direction of travel (12) of the vehicle, the venting duct (40) has a venting duct longitudinal axis (42) which forms an acute angle (16) with the direction of travel (12) of the vehicle, and the venting duct (40) is formed to widen in cross section (46).

2. Bumper according to Claim 1, **characterized in that** the venting duct (40) is designed as a separate component (48).

3. Bumper according to one of the preceding claims, **characterized in that** the venting duct (40) has a C profile (48).

4. Bumper according to one of the preceding claims, **characterized in that** the external inner side (26) of the embossing (20) is designed to merge into a wall (44) of the venting duct (40).

5. Bumper according to one of the preceding claims, **characterized in that** the bumper (10) has plug sockets (102).

6. Bumper according to one of the preceding claims, **characterized in that** the bumper (10) has at least one cover (50).

7. Bumper according to Claim 6, **characterized in that** the cover (50) has at least one through-passage (52) .

8. Bumper according to Claim 7, **characterized in that** the through-passage (52) lets through the venting flow (60) into the venting duct (40).

9. Bumper according to one of Claims 6 to 8, **characterized in that** the cover (50) is or can be releasably and/or movably connected to the bumper (10) .

10. Bumper according to Claim 9, **characterized in that** the cover (50) is or can be releasably and/or movably connected to the base surface (22), the rear side (28), the internal inner side (24) or the external inner side (26) of the embossing (20) .

## Revendications

1. Pare-choc (10) comprenant au moins un estampage (20), l'estampage (20) s'étendant dans le sens opposé au sens de déplacement (12) du véhicule et l'estampage (20) comportant une surface de base (22), un côté arrière (28), un côté intérieur (24) et un côté extérieur (26), la surface de base (22) étant configurée comme marche et le côté arrière (28) présentant au moins une première ouverture d'évent (30),
**caractérisé en ce que**
la première ouverture d'évent (30) est reliée à un canal d'évent (40),
**en ce que** le canal d'évent (40) s'étend dans le sens opposé au sens de déplacement (12) du véhicule,
**en ce que** le canal d'évent (40) présente un axe longitudinal (42) de canal d'évent qui forme un angle aigu (16) avec le sens de déplacement (12) du véhicule et
**en ce que** le canal d'évent (40) s'évase en coupe transversale (46).

2. Pare-choc selon la revendication 1, **caractérisé en ce que** le canal d'évent (40) est configuré comme composant distinct (48).

3. Pare-choc selon l'une des revendications précédentes, **caractérisé en ce que** le canal d'évent (40) présente un profil (48) en forme de C.

4. Pare-choc selon l'une des revendications précédentes, **caractérisé en ce que** le côté extérieur (26) de l'estampage (20) est formé dans une paroi (44) du canal d'évent (40).

5. Pare-choc selon l'une des revendications précédentes, **caractérisé en ce que** le pare-choc (10) présente des douilles d'enfichage (102).

6. Pare-choc selon l'une des revendications précédentes, **caractérisé en ce que** le pare-choc (10) présente au moins un couvercle (50).

7. Pare-choc selon la revendication 6, **caractérisé en ce que** le couvercle (50) présente au moins un passage (52) .

8. Pare-choc selon la revendication 7, **caractérisé en ce que** le passage (52) permet le passage de l'écoulement d'évent (60) dans le canal d'évent (40).

9. Pare-choc selon l'une des revendications 6 à 8, **caractérisé en ce que** le couvercle (50) est relié ou peut être relié de manière libérable et/ou mobile au pare-choc (10).

10. Pare-choc selon la revendication 9, **caractérisé en ce que** le couvercle (50) est relié ou peut être relié de manière libérable et/ou mobile à la surface de base (22), au côté arrière (28), au côté intérieur (24) ou au côté extérieur (26) de l'estampage (20).
